# EUROPEAN PATENT APPLICATION

(11) **EP 1 480 381 A2**
(43) Date of publication of application: **24.11.2004**
(21) Application number: 04300267.4
(22) Date of filing: 10.05.2004
(51) Int. Cl.: H04L 12/24, H04L 12/58

(54) **Method and system for message based policy distribution**

(30) Priority: 09.05.2003 US 434172
(71) Applicant: ALCATEL, 75008 Paris (FR)
(72) Inventor: Cuervo, Fernando, Ottawa Ontario K0A 1T0 (CA)
(74) Representative: Lenne, Laurence

(57) **Abstract**

An architecture and methods for policy management and distribution in a communications network is presented. Policy manager, policy server, and policy-managed client devices used in provisioning a distributed service are adapted to employ messaging servers between policy managers and policy servers, as well between policy servers and policy-managed client devices. Messaging servers provision publish/ subscribe interfaces to each policy manager, policy server, and policy-managed client device. The advantages derived by employing publish/ subscribe messaging to inter-work the elements include: publish/subscribe mechanism-based notifications and processing directions dissemination, repository transparency, separation of functionality across policy managers and policy servers, and independence between policy and static device, user and service profiles.

## Description

### Field of the invention

The invention relates to policy based communications network management and service provisioning, and in particular to the problem of distributing policies among policy managers, policy servers and policy-managed client devices in communication networks.

### Background of the invention

In the context of policy-based network management and service provisioning, a policy manager entity manages policy life cycles, which involves the execution of policy management functions such as, but not limited to: activation, deactivation, replacement, and modification of policies.

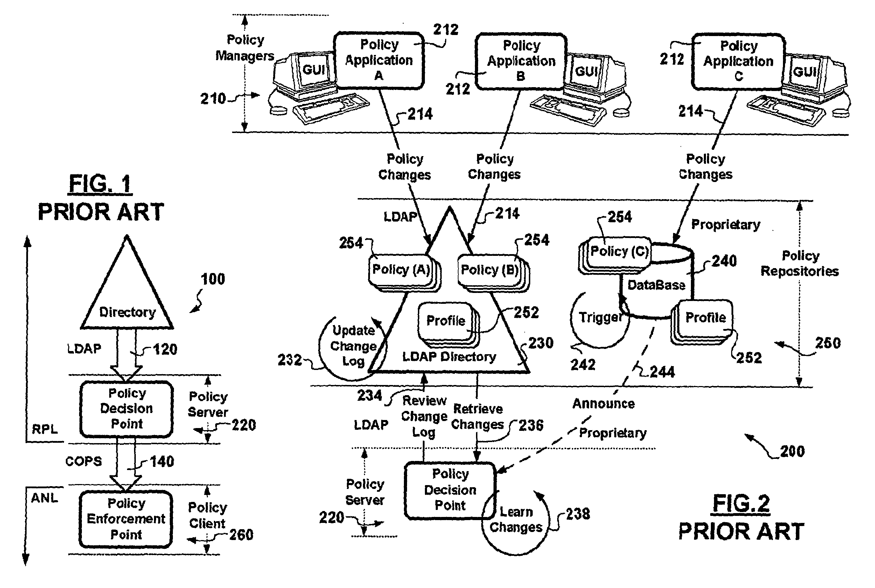

An Internet Engineering Task Force (IETF) reference policy management and policy distribution architecture 100, presented in FIG. 1 and described in various IETF reference drafts, is a distributed architecture based on the use of the Lightweight Directory Access Protocol (LDAP) 120 and Common Open Policy Service (COPS) 140 protocols.

Typical prior art policy management and distribution implementations, exemplary shown in FIG. 2, make policy updates to a repository 250 using a repository specific mechanism 232/234/236/238 and/or 244. The updates are communicated to an associated policy server 220, referred to as a Policy Decision Point (PDP) with respect to the IETF reference architecture.

The use of protocols such as LDAP (120) in inter-working elements of a typical implementation, requires pre-provisioned knowledge of policy managers 210, policy servers 220, policy client devices 260, and pre-provisioned recovery actions to mitigate fault conditions such as but not limited to the exemplary use of an alternate policy server (220).

FIG. 2 also shows how policy applications 212 inter-work with the policy server 220, in accordance with the reference IETF architecture, when a combination of a directory 230 and one or more databases 240 is used. Today's LDAP directory (230) technology provides centralized repositories. The deployment 200, exemplary presented in FIG. 2, is perhaps the most commonly implemented mechanism for policy storage and distribution today. The use of mixed repository technology (directory 230 and database 240) is very common, and leads to complex implementations which necessitate the use of multiple human-machine interfaces for: management, directory maintenance, database maintenance, etc. respectively.

In using the LDAP protocol for policy updates, the policy server 220 cannot be notified of policy management decisions (policy changes 214) such as, but not limited to: activating a policy group, replacing a given policy, and deactivating a policy. The use of the LDAP protocol is neither adequate to provide notifications of policy changes, nor adequate to efficiently determine what changes have been made to policies.

Ad-hoc mechanisms such as reviewing 234 a file, such as a "change log" file, have been implemented, but such solutions tend to be inefficient and do not scale well when high policy processing capacity is necessary.

Efficiency in policy distribution is lacking in LDAP-based implementations as all changes to the repository 250 logged together in the associated change log file have to be perused through by each policy server 220 to determine whether these apply thereto.

Using the IETF architecture lacks separation between "policy intent" and "policy state" making it impossible to ascertain adherence to a policy life cycle change since no explicit functionality is available to represent the policy state separate from the policy life cycle change specifications.

Even if the above mentioned inadequacies in using the LDAP protocol were to be solved, such solutions would remain LDAP technology dependent. Furthermore, adherence to the IETF reference architecture is not suitable for use scenarios in which directories 230 cannot be employed due to legacy support and performance requirements, or because of the LDAP technology's inability to represent relationships in the directory information tree.

Regarding the exemplary prior art inter-working shown in FIG. 2, databases 240 support triggering functionality 242 used to announce 244 policy changes. Extensive use of triggering 242 may be necessary, the amount of which depends on: the particular database technology used, real-time performance requirements, etc. Triggering implementations vary, and typically lead to proprietary implementations.

Separation between policies and users, and devices and service profiles is not provided and are typically mixed in prior art IETF architecture directory or database implementations. Consequently, a prior art directory 230 stores policy decisions that are static, reducing the functionality of the policy server 220 to simply distributing "pre-canned" policies 254.

In accordance with current practices in the art, policy related and other non-policy provisioned information (such as, but not limited to: device profiles, user profiles, and service profiles) are stored in a central repository 250 with many proprietary dependencies. Such practices result in a tight coupling between a policy and: a user, a device and/ or related service profiles. The tight coupling makes policy configuration difficult, if not impossible, when different policy managers 210 are used to manage the profiles 252 and policies 254 such is the case when, for example, device profiles 252 are not managed by the same administrative entity handling policy life cycles. This scenario is likely to exist in use scenarios where the policy client devices 260 may dynamically join policy domains, such as is the exemplary case of roaming devices.

Cross-domain policy-managed device operability is of great importance in provisioning communications services. The above presented current shortcomings have resulted in expensive solutions. There therefore is a need to solve the above mentioned issues.

### Summary of the invention

In accordance with an aspect of the invention, a policy management architecture is provided. The policy management architecture includes a first messaging server enabling message-based communications via publish/subscribe interfaces. A policy manager publishes policy life cycle change notifications over a policy manager publish/subscribe interface to the messaging server. And, a policy server subscribes to policy life cycle change notifications over a policy server publish/subscribe interface to the messaging server. The first messaging server provides an inter-working mechanism between the policy manager and the policy server. Based on publication and subscription criteria, the messaging server establishes communication between the policy manager and the policy server reducing reliance on prior pre-programmed knowledge of the policy manager and the policy server enabling selective participation of the policy server in a policy domain.

In accordance with another aspect of the invention, the policy management architecture includes a second messaging server enabling message-based communications via publish/ subscribe interfaces. The policy server publishes policy life cycle change notifications over the policy server publish/ subscribe interface. And, a policy client subscribes to policy life cycle change notifications over a policy client publish/subscribe interface. The second messaging server provides an inter-working mechanism between the policy server and the policy client based on a publication and subscription criteria establishing communication between the policy server and the policy client. Reliance on prior pre-programmed knowledge of the policy server and the policy client is reduced enabling selective policy client participation in a policy domain.

In accordance with a further aspect of the invention, the policy management architecture further includes a Universal Description Discovery Integration (UDDI) service providing automated query based messaging server discovery at run-time.

In accordance with a further aspect of the invention, a policy dissemination method is provided. The method includes a sequence of steps. A policy life cycle change notification is published over a policy manager publish/subscribe interface associated with a policy manager. A policy server subscribing to the policy life cycle change notifications is determined. The policy life cycle change notification are made available selectively to the determined server.

In accordance with a further aspect of the invention, the policy dissemination method includes registering the policy manager with a messaging service provisioning publish/subscribe interfaces to establish communication therewith.

In accordance with a further aspect of the invention, the policy dissemination method includes: retrieving a policy based on the policy life change notification, evaluating the policy, generating a policy decision, and publishing the policy decision over a policy server publish/subscribe interface associated with the policy server.

In accordance with a further aspect of the invention, the policy dissemination method includes registering the policy server with a messaging service provisioning publish/subscribe interfaces to establish communication therewith.

In accordance with a further aspect of the invention, the policy dissemination method includes: retrieving a policy decision subscribed to by a policy client, and enforcing the policy decision.

In accordance with a further aspect of the invention, the policy dissemination method includes registering the policy client with a messaging service provisioning publish/subscribe interfaces to establish communication therewith.

In accordance with a further aspect of the invention, the policy dissemination method includes: receiving policy related input, processing the policy related input, and updating a policy management object model with results of processing the policy related input.

In accordance with a yet another aspect of the invention, the policy dissemination method includes generating a policy life cycle change notification.

The advantages are derived from managing intelligent policy based devices creating many new products and services. The solution presented herein influences the way in which Independent Software Vendors (ISV) and telecommunications products inter-work employing publish/subscribe mechanism-based notifications and processing directions dissemination to provide repository transparency, separation of functionality across policy managers and policy servers, and independence between policy and static device, user and service profiles.

### Brief description of the drawings

The features and advantages of the invention will become more apparent from the following detailed description of the preferred embodiments with reference to the attached diagrams wherein:
FIG. 1 is a schematic diagram showing prior art hierarchical interacting elements of an Internet Engineering Task Force (IETF) reference architecture for policy distribution based on the use of the Lightweight Directory Access Protocol (LDAP) and Common Open Policy Service (COPS) protocols;
FIG. 2 is a schematic diagram showing prior art interaction between a Policy Server (PS), an Lightweight Directory Access Protocol (LDAP) directory, and at least one database;
FIG. 3 is a schematic diagram showing an exemplary exchange of messages enabling a policy server via a publish/subscribe messaging mechanism to join a policy domain managed by a policy manager in accordance with an exemplary embodiment of the invention; and
FIG. 4 is a schematic diagram showing inter-working details between policy management and distribution elements, in accordance with an exemplary embodiment of the invention.

It will be noted that in the attached diagrams like features bear similar labels.

### Detailed description of the embodiments

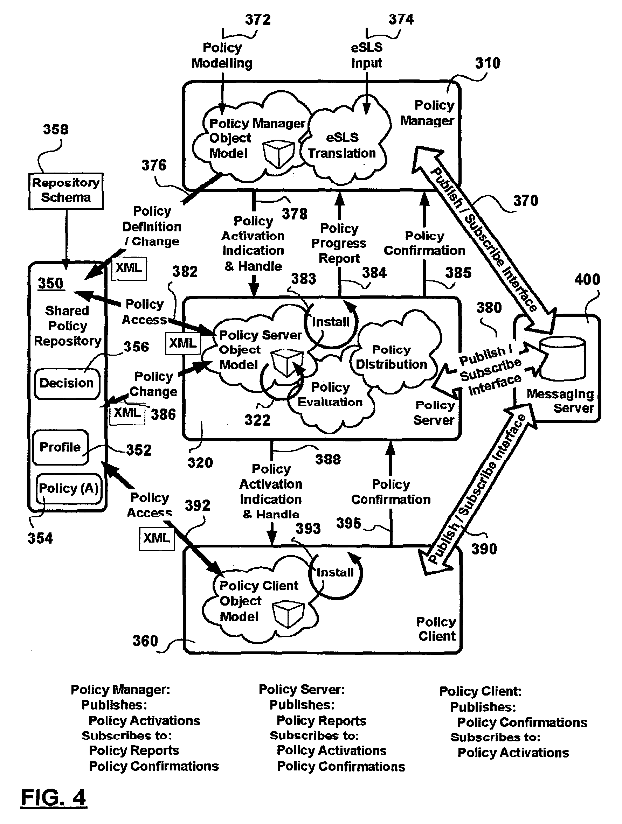

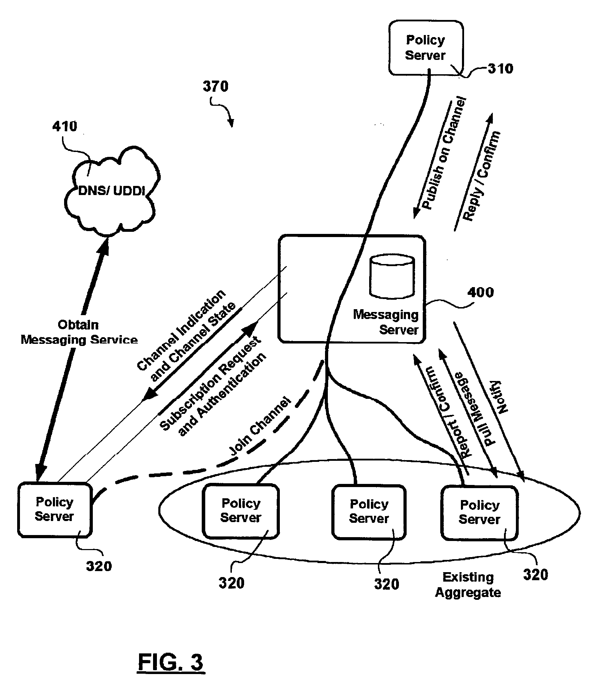

In accordance with an exemplary embodiment of the invention, presented in FIG. 4, means for distributing policies and policy changes between policy repository(ies) 350, policy server(s) 320, and policy-managed client device(s) 360 are presented. Knowledge of policy server(s) 320, policy-managed client device(s) 360 for policy distribution is discovered, and recovery action steps are determined at run-time via the use of a messaging service.

In accordance with the exemplary embodiment, message-based policy distribution method and architecture are provided. The architecture introduces a new notification mechanism enabling inter-working between policy manager(s) 310, policy server(s) 320, shared (centralized or distributed) policy repository(ies) 350, and policy-managed client devices 360. The implementation of the notification mechanism may employ a messaging server 400 which provides publish/subscribe interfaces 370, 380 and 390 to the policy manager(s) 310, the policy server(s) 320, and the policy-managed client device(s) 360. A registration mechanism is employed between policy managers 310, policy servers 320, and policy-controlled client devices 360 to eliminate the need for pre-provisioned knowledge shared between the components.

In accordance with the exemplary embodiment of the invention, a registration mechanism is provided between policy manager 310 and policy server 320 via the publish/subscribe interfaces 370 and 380 as schematically shown in FIG. 3 and FIG. 4. In accordance with the exemplary embodiment of the invention, a registration mechanism is also provided between the policy server 320 and the policy-managed client devices 360 as shown in FIG. 4.

Although a single messaging server 400 is shown for brevity of the description, the invention is not limited to the implementation of the exemplary embodiment shown, a group of messaging servers 400 may be used, each of which services, but is not limited to: a particular policy domain, inter-working between policy managers 310 and policy servers 320 only, inter-working between policy servers 320 and policy-managed client devices 360 only, or a particular policy-managed service.

In accordance with the exemplary embodiment of the invention, employing the messaging exchange capabilities provided by the messaging server 400, a policy server 320 may find an appropriate policy manager 310 using an open service locator mechanism, such as but not limited to, Universal Description, Discovery Integration/Web Services Description Language (UDDI/WSDL). Therefore policy servers 320 do not need to have preconfigured knowledge of all possible policy managers 310 for all policy domains, since the policy managers 310 can be found as needed at run-time. The run-time determination provides inter-working between policy servers 320 and policy managers 310 that are associated with different policy domains.

Making reference to FIG. 3, which shows an implementation of policy manager-policy server inter-working via a publish/subscribe interface 370 and UDDI/WSDL service location and description 410, the following exemplary steps are performed:

The policy server 320 consults the UDDI/WSDL service locator description 410, using a generic addressing mechanism, such as but not limited to using a Universal Resource Location (URL) specification. The policy server 320 is provided with communication network addressing information of a messaging server 400.

The policy server 320 connects to the messaging server 400 via the publish/subscribe interface 370 and perhaps using a channel (or queue) identification specification to subscribe to a policy manager 310 publishing policy life cycle state changes.

The policy server 320 joins the channel perhaps by presenting a proper authorization credential as may be necessary. Once the authorization to join and/or acknowledgement of joining is granted, the policy server 320 belongs to the aggregate of policy servers 320 that are listening for policy life cycle state changes published by the policy manager 310. The policy server 320 may be provided with direct communication network addressing information regarding the policy manager 310.

In accordance with the exemplary embodiment of the invention, policy managers 320 in a policy domain may publish their policy management capabilities to several messaging services (400) for increased reliability and flexibility. Redirection may occur when another messaging server 400 known to the messaging server 400 originally addressed by the policy server 320 subscriber is capable of satisfying the subscription request, having a channel that matches the subscription requirements of the policy server 320 subscriber. The redirection is accepted with a change of communication network addressing and perhaps an authorization token if necessary.

Notification indication 378, message retrieval, policy progress report 384, and confirmations 385 are exchanged between the policy server 320 and the policy manager 310.

In accordance with the exemplary implementation of the exemplary embodiment of the invention, confirmations 385 and state synchronizations are supported via point-to-point messaging between the policy manager 310 and policy server 320. Alternatively, another service may be separately used for synchronization.

When a policy server 320 subscribes to a policy manager 310 for policy life cycle changes, it is up to the policy server 320 to synchronize its state. While in the synchronization phase, the subscriber policy server 320 must receive any additional notifications 378 that may affect policy states affecting the operation of the policy server 320. The publishing policy manager 310 consolidates the current policy states of the aggregate group of policy server 320 subscribers that implement common policies. A state synchronization notification 378 provided by the policy manager 310, includes a handle to a list of policies 354 or policy decisions 356 that must be implemented by a joining policy server 320 subscriber in order to belong to the aggregate group of policy servers 320 associated with the policy manager 310. Therefore, in accordance with the exemplary embodiment of the invention, each policy server 320 manages its own state. The only information kept by the policy manager 310 is the list of policy servers 320 that require notifications 378 and the current state of the policy domain.

Minimal state keeping is tracked by a policy manager 310. Although for most applications the policy manager 310 must have some means of authenticating each policy server 320, the policy manager 310 is not concerned with the presence of a given policy server 320 in a communications network, only with those policy servers 320 that declare their presence are served notifications 378 and processing instructions. Once a policy server 320 has established its presence, the policy manager 320 must reliably deliver notifications 378 and processing instructions thereto which represents the full extent of the state keeping requirements of the policy manager 310.

In accordance with the exemplary embodiment of the invention, the described the messaging service -based inter-working details between a policy server 320 and a policy manager 310, can be employed, with due change of details for inter-working policy-managed client devices 360 with a policy server 320. In accordance with a typical deployment, policy managers 310 may not be actively performing policy life cycle changes at all times therefore the inter-working between a policy manager 310 and a policy server 320 may typically be sporadic as needed. An exemplary policy manager 310 may have a web application implementation wherein a service subscriber uses the policy manager web application to change 374 service parameters. In accordance with another typical deployment, policy-managed client devices 360 may access provisioned services on a need to use basis, therefore the inter-working between a policy-managed client device 360 and a policy server 320 may also typically be sporadic. An exemplary policy-managed client device 360 may be a roaming handheld personal communications device enabling access to data and voice services. As exemplary shown in FIG. 4, the exemplary policy manager 310 publishes "policy activations", and subscribes to "policy reports" and "policy confirmations"; the exemplary policy server 320 publishes "policy reports", and subscribes to "policy activations" and "policy confirmations''; and the policy-managed client device 360 publishes "policy confirmations", and subscribes to "policy activations".

A deployment scenario, in accordance with the exemplary embodiment of the invention, may employ only a few policy managers 310 which will provide policy directives 376/378 (e.g. activate, deactivate, modify) to a large number of policy servers 320, which in turn will manage the behavior of a very large number of policy-managed client devices 360. In accordance with the exemplary embodiment of the invention, several orders of magnitude between the policy managers 310, policy servers 320, and policy-managed client devices 360 may quite reasonably be expected to interact in a typical deployment scenario.

It is therefore apparent that a policy server 320 may be the most active of the elements and that a large number of policy-managed client devices 360 are served. In order to provide a timely response, a policy server 320 typically employs an algorithm to distribute decisions in an manner consistent with guaranteeing policy information throughput in the policy domain. Details of such algorithms are beyond the present description.

An appropriate level of trust is assumed to exist between each the policy manager 310 and the policy server 320 pair, which implies that the policy manager 310 has an appropriate authentication/authorization mechanism to distribute policies only to the right policy managed client devices 360. In practice typically mutual authentication is performed, that is: the policy server 320 belongs to a recognized device provider and the policy manager 320 belongs to a recognized service provider.

In accordance with the exemplary embodiment of the invention, "policy intent" (354) is separated from "policy decisions" 356 and from other management information such as device, user or service profiles 352.

Policy intent (354) is kept either in a dedicated repository or portion of the shared repository 350 managed by the policy manager 310 and made accessible to the policy servers 320 in the associated policy domain. The policies 354 stored in such a repository are those that shall be implemented by a policy-managed client device 360 that is to comply with the operation of the policy domain.

Policy decisions 356 are kept either in a dedicated repository managed by the a policy server 320 or the shared policy repository 350 and accessible to the participating policy-managed client devices 260. Policy decisions 356 are policy-managed client device 360 specific policies that are derived from the policies 354 activated by the corresponding policy manager 310. Policy decisions 356 are obtained through an evaluation process 322 that is performed by the policy server 230 and may use additional information from user, device, or service profiles 352.

In accordance with the exemplary embodiment of the invention, both "policy intent" and "policy decision" repositories can be physically stored in a single physical repository entity while these are kept logically distinct.

Employing policy confirmations 395 in accordance with the exemplary embodiment of the invention separates "policy intent" from "policy state". The separation is advantageous since policy states could be employed to specify states of the policy-managed client devices. A policy state may exemplarily represent a confirmed enforcement 395/385 of a policy decision. Policy states may have other interpretations and implementations without limiting the invention.

In accordance with the exemplary embodiment of the invention, the shared repository 350 is fully transparent to the policy server 320, policy manager 310, and policy-managed client devices 360. A notification mechanism using a policy handle is employed for accessing policies 354 and policy decisions 356. The handle includes processing instructions that indicate actions to be taken with respect to the respective policies 354 and policy decisions 356.

In accordance with an exemplary deployment scenario, the policy manager 310 receives the input of an operator driven policy modeling process 372, and a Service Level Specification (SLS) 374. The policy manager 310 outputs policies 354 that are provided to and (persisted) stored in 376 the policy repository 350. The provision, exchange, and perhaps the storage of policies 354 makes use of a repository independent generic representation, for example using the extensible Markup Language (XML), to provide independence between the repository 350 and the participating policy manager(s) 310, policy server(s) 320, and policy-managed client devices 360.

Having persisted 376 the output policies in the repository 350, the relevant policy servers 320 must be informed of thereof.

In accordance with the exemplary implementation of the invention, a notification mechanism is employed and includes:
- a policy handle, which indicates the location in the shared policy repository 350 - a reference to: a specific policy 352, policy group 352, a specific policy decision 356 or a group of policy decisions 356 that must be implemented. The handle is used to retrieve 382 a policy 352 from the corresponding location. For example, by specifying a Universal Resource Locator (URL) address (handle 352), an HyperText Transfer Protocol Get (HTTP-Get) is used to retrieve 382/392 the corresponding policy 352.
- processing instructions, which indicate actions to be followed for example, but not limited to: in installing a policy 383/393, providing progress-reports 384, and confirmation/acknowledgements 385/395. The notification mechanism itself does not specify any specific actions. Actions are to be agreed between the policy managers 310, policy servers 320, and policy-managed client devices 360 components that implement functionality particular to a policy domain (e.g., QoS, security, etc.)

A notification 378 for a particular policy domain is issued (378) to all relevant policy servers 320 that have registered with the policy manager 310 as being interested in that particular policy domain topic. A domain-topic is a policy sub-set that belongs to a policy domain. Issuing a notification 378, means that the notification 378 is sent via the messaging service 400 to all subscribing policy servers 320.

Upon receiving a notification 378, via the messaging server 400, a policy server 320 retrieves 382 and evaluates policies 354 specified by the notification 378 to create all policy decisions 356 applicable to the intended policy-managed client devices 360.

Policy evaluation may require interaction with another service (not shown) that provides device, user or service specific information. A policy manager 310 typically provides generic policies applicable to policy-managed client devices 360 served by the policy server 320. When the policy server 320 evaluates a policy 354, for example to instantiate a particular policy corresponding to a policy-managed client device 360 that has an communications network address, software and hardware versions that result in varying capabilities to implement the policy 354, the policy server 320 must obtain this specific instantiation data.

In accordance with the exemplary embodiment of the invention, "processing-instructions" in the notification 378 may be used to indicate that a policy manager 310 requires, for example, progress reports 384 and completion reports (385). This information may be used by the policy manager 310 application (212/312), not shown, as feedback in deriving other policy state changes 376. Further details of the particular processing instructions 383/384/485 are specific to each particular implementation in a particular policy domain and beyond the scope of the description herein.

In accordance with the exemplary embodiment of the invention, as mentioned herein above, policy servers 320 and policy-managed client devices 360 inter-work in a similar fashion. For each policy change 386, the policy server 320, notifies 388 at least one policy-managed client device 360, providing at least one corresponding handle and at least one processing instruction. The policy-managed client device 360 accesses 392 the repository 350 using the at least one provided handle, to retrieve policies 254 and/or policy decisions 354 depending on the implementation. Retrieved policies 354 and retrieved policy decisions 356 are installed 393. And, in following processing instructions provided in the notification 388, confirmations 395 are propagated to the associated policy server 320 towards the policy manager 310. The receipt of confirmations 395 by a policy server 320 from a policy-managed client device 360 may result in issuing policy progress reports 384 and/or confirmations 385 to the policy manager 310.

The policy manager 310 and policy server 320 are shown as being separate entities in FIG. 4, however, the policy manager 310 and policy server 320 could be co-located on a common platform, for example a network management product such as, but not limited to, an Alcatel 5620 Network Management System.

In accordance with another implementation of the exemplary embodiment of the invention, the policy manager 310 may not actively participate in policy distribution and enforcement except perhaps in posting defined policies, monitoring policy distribution and receiving the exemplary policy process reports 384 and/or policy confirmations 386 when necessary.

The persistent policy repository 350 is shown external to both the policy manager 310 and policy server 320, alternatively, each of the policy manager 310 and policy server 320 could have an integrated policy repository. Other implementations are possible without limiting the invention thereto.

In accordance with the exemplary embodiment of the invention, wherein a shared persistent storage (repository) 350 is employed, the messaging mechanism 370/380/390 between the policy manager 310, policy server 320, and policy-managed client devices 360 is independent of the persistency mechanism (i.e., database, directory) 350, leading to much simpler implementations and operation enabling mechanisms such as server redirection to be implemented transparently of the policy server 320, if required for reliability reasons.

The proposed method of policy distribution is scalable as only one notification 378, issued by a policy manager 310 for each policy life cycle change per policy domain, is reliably delivered to policy servers 320 that are affected by policy life cycle changes in the policy domain. Employing the publish/subscribe interfaces 370/380/390, each policy manager 310, policy server 320, and policy-managed client device 360 entity is only concerned with what it consumes and what it publishes, and not about to whom it publishes or from whom it consumes - the messaging server 400 replicating the notification 378 to each intended entity. A higher degree of implementation flexibility and transparency is therefore provided between the entities without requiring preconfiguration. The notification mechanism proposed herein employed over the publish/subscribe interface 370, makes a policy server 320 aware only of the policy life cycle changes that are relevant to the policy domain(s) in which the policy server 320 participates at improved efficiencies.

In accordance with the exemplary embodiment of the invention, the policy manager 310 provides only policy intent, the details of the policy evaluation for each of the policy-managed client devices 360 supported by a policy server 320 may require the knowledge of device or subscriber specific profiles 352. Therefore, profile information 352 and policies 354 are decoupled, allowing policy-managed client devices 360 to be served in corresponding policy domains served by corresponding policy servers 320 with specific policies 354. This is enabled via the open methods of locating and using profiles and other service data such as the publish/subscribe mechanism provided by the messaging service 400.

An implementation adhering to the exemplary embodiment of the invention, benefits from a comparatively enhanced performance in deployment scenarios supporting an aggregation of a large number of policy-managed client devices 360 under a policy domain, and/or a deployment scenario supporting highly mobile and intelligent policy-managed client devices 360. Intelligent policy-managed client devices 360 may provide profiles 352 by themselves. For example this would be the case with a wireless or access applications. Furthermore, the invention is ideally suited for cases in which there are a large number of policy servers 320 or network elements (360) with policy decision capabilities.

The embodiments presented are exemplary only and persons skilled in the art would appreciate that variations to the above described embodiments may be made without departing from the spirit of the invention. The scope of the invention is solely defined by the appended claims.

## Claims

1. A policy management architecture comprising:
**a**. a first messaging server enabling message-based communications via publish/subscribe interfaces;
**b**. a policy manager publishing policy life cycle change notifications over a policy manager publish/subscribe interface; and
**c**. a policy server subscribing to policy life cycle change notifications over a policy server publish/ subscribe interface,
the first messaging server providing an inter-working mechanism between the policy manager and the policy server, based on publication and subscription criteria, the messaging server, establishing communication between the policy manager and the policy server reducing reliance on prior pre-programmed knowledge of the policy manager and the policy server enabling selective participation of the policy server in a policy domain.

2. The policy management architecture claimed in claim 1, further comprising:
**a**. a second messaging server enabling message-based communications via publish/subscribe interfaces;
**b**. the policy server publishing policy life cycle change notifications over the policy server publish/subscribe interface; and
**c**. a policy client subscribing to policy life cycle change notifications over a policy client publish/subscribe interface,
the second messaging server providing an inter-working mechanism between the policy server and the policy client based on a publication and subscription criteria establishing communication between the policy server and the policy client reducing reliance on prior pre-programmed knowledge of the policy server and the policy client enabling selective policy client participation in a policy domain.

3. The policy management architecture claimed in claim 1, further comprising a repository separately storing at least one of policies, policy decisions, and policy profiles groups.

4. The policy management architecture claimed in claim 3, wherein the repository is one of a repository associated with the policy manager, a repository is associated with the policy server, and a centralized repository accessed by both the policy manager and the policy server.

5. The policy management architecture claimed in claim 1, further comprising a Universal Description Discovery Integration (UDDI) service providing automated query based messaging server discovery at run-time.

6. The policy dissemination method comprising steps of:
**a**. publishing a policy life cycle change notification over a policy manager publish/subscribe interface associated with a policy manager;
**b**. determining a policy server subscribing to the policy life cycle change notifications; and
**c**. selectively making the policy life cycle change notification available to the determined server.

7. The policy dissemination method claimed in claim 6, further comprising prior a step of registering the policy manager with a messaging service provisioning publish/subscribe interfaces to establish communication therewith.

8. The policy dissemination method claimed in claim 6, further comprising steps of:
**a**. retrieving a policy based on the policy life change notification;
**b**. evaluating the policy;
**c**. generating a policy decision; and
**d**. publishing the policy decision over a policy server publish/ subscribe interface associated with the policy server.

9. The policy dissemination method claimed in claim 8, further comprising prior a step of registering the policy server with the messaging service provisioning publish/ subscribe interfaces to establish communication therewith.

10. The policy dissemination method claimed in claim 8, further comprising a step of: storing the policy corresponding to the policy life change notification in a repository.

11. The policy dissemination method claimed in claim 8, further comprising a step of: instantiating the policy corresponding to the policy life change notification in a repository.

12. The policy dissemination method claimed in claim 8, further comprising a step of: updating the policy corresponding to the policy life change notification in a repository.

13. The policy dissemination method claimed in claim 8, further comprising a step of: storing the evaluated policy decision in a repository.

14. The policy dissemination method claimed in claim 8, further comprising a step of: instantiating the evaluated policy decision in a repository.

15. The policy dissemination method claimed in claim 8, further comprising a step of: updating the evaluated policy decision in a repository.

16. The policy dissemination method claimed in claim 8, further comprising a steps of:
**a**. retrieving a policy decision subscribed to by a policy client; and
**b**. enforcing the policy decision.

17. The policy dissemination method claimed in claim 16, further comprising prior a step of registering the policy client with the messaging service provisioning publish/subscribe interfaces to establish communication therewith.

18. The policy dissemination method claimed in claim 6, further comprising prior steps of:
**a**. receiving policy related input;
**b**. processing the policy related input; and
**c**. updating a policy management object model with results of processing the policy related input.

19. The policy dissemination method claimed in claim 19, further comprising a steps of: generating a policy life cycle change notification.
